# EUROPEAN PATENT APPLICATION

(11) **EP 2 196 486 A1**
(43) Date of publication of application: **16.06.2010**
(21) Application number: 08291193.4
(22) Date of filing: 12.12.2008
(51) Int. Cl.: C08G 63/64, C08G 64/18

(54) **Process to prepare di- and multiblock copolymers**

(71) Applicant: Total Petrochemicals Research Feluy, 7181 Seneffe (Feluy) (BE); Centre National pour la Recherche Scientifique (CNRS), 75016 Paris (FR)
(72) Inventor: Carpentier, Jean-Francois, 35690 Acigne (FR); Helou, Marion, 35000 Rennes (FR); Guillaume, Sophie, 35500 Vitré (FR); Razavi, Abbas, 7000 Mons (BE)
(74) Representative: Roufosse, Micheline C.

(57) **Abstract**

The present invention discloses a process for preparing di-, tri, or multi-block polyester/polycarbonate (co)polymers by ring-opening polymerisation in the presence of a non-toxic catalyst system in combination with either a linear monohydroxy HO-PC-OR, or a linear telechelic dihydroxy HO-PC-OH, or a star polyhydroxy R-(PC-OH)n end-capped polycarbonate.

## Description

The present invention relates to the field of di-, tri- and multi-block polyesters/polycarbonates copolymers based on the use of hydroxyl-end capped polycarbonates as transfer agents and macro-initiators.

There is an obvious need for polymer materials based on renewable resources and efficient processes for preparing them. Of particular interest are block copolymers which allow, upon adjusting the size and nature of each block, tuning of the physical properties to obtain very specific physical properties, for instance phase separation of blocks. As an example, diblock and triblock polycarbonate-polyesters that combine a soft poly(trimethylene carbonate) block (PTMC) and hard, crystallisable poly(L- or D-lactide) blocks (PLLA, PDLA), thus forming so-called thermoplastic elastomers, are biodegradable and biocompatible and thus find applications as biomaterials.

The synthesis of linear or star polycarbonates hydroxy-capped at each arm terminus is briefly documented in literature in the case of poly(trimethylene carbonate). The preparation of linear telechelic dihydroxy HO-PTMC-OH and 3-arms star trihydroxy R-(PTMC-OH)₃ polymers has been achieved by the ring-opening polymerization (ROP) of TMC in the presence of tin-based catalysts such as SnOct₂ (Oct = octanoate, 2-ethylhexanoate), and a diol or a triol respectively, such as 1,4-butanediol as described for instance in Fredrik Nederberg, Joens Hilborn and Tim Bowden, Macromolecules 2006, 39, 3907-3913, or triethyleneglycol as reported in Jan Lukaszczyk, Piotr Jelonek and Barbara Trzebicka, Pol. Polimery 2008, 53, 433-439, or 1,6-hexanediol or glycerol as reported in Zheng Zhang, Dirk W. Grijpma and Jan Feijen, Macromol. Chem. Phys., 2004, 205, 867-875, and in Patricia Y. W. Dankers, Zheng Zhang, Eva Wisse, Dirk W. Grijpma, Rint P. Sijbesma, Jan Feijen and E. W. Meijer Macromolecules, 2006, 39, 8763-8771 (Scheme 1). These reactions typically proceed at a temperature higher than 100 °C for a couple of hours. They are schematically represented in scheme 1.

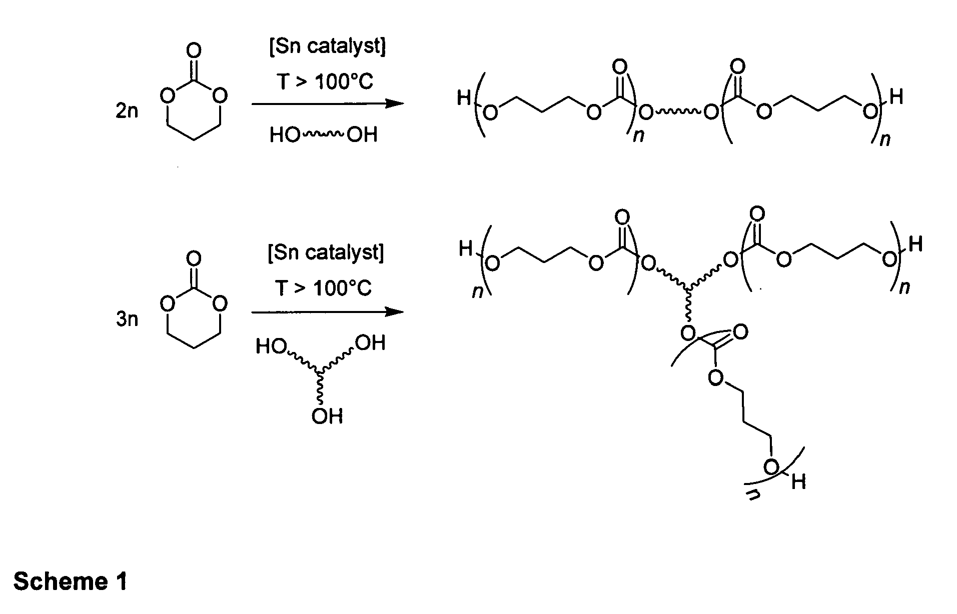

In some cases, macrodiols HO-X-OH have also been used as initiators/transfer agents to prepare linear telechelic dihydroxy HO-PTMC-X-PTMC-OH polymers, by ROP of TMC in the presence of tin catalysts, as described for instance with poly(ethylene glycol) (HO-PEG-OH) in Ying Zhang and Ren-Xi Zhuo, Biomaterials 2005, 26, 2089-2094, or with dihydroxy end-capped poly(caprolactone) (HO-PCL-OH) as described in Yong Tang Jia, Hak Yong Kim, Jian Gong, Duok Rae Lee and Bin Ding, Polymer Intern. 2004, 53, 312-319, or to prepare Y-shaped X-(PTMC-OH)₂ copolymers as reported with the ROP of TMC from poly(ethylene glycol)-CH-(CH₂OH)₂ and ZnEt₂ in Huai-Hong Zhang, Zi-Qun Huang, Bai-Wang Sun, Jia-Xiu Guo, Jian-Li Wang, Yao-Qiang Chen, J. Polym. Sci. 2008, 46, 8131-8140.

It has been reported that those linear telechelic dihydroxy HO-PTMC-OH and 3-arms star trihydroxy R-(PTMC-OH)₃ polymers can act as macroinitiators for the preparation of multiblock polycarbonate-polyester copolymers. Thus, PLA-PTMC-PLA triblock copolymers based on TMC and lactide as biodegradable thermoplastic elastomers have been prepared starting from linear telechelic dihydroxy HO-PTMC-OH polymers, lactide (either L-, D- or D,L-LA) and SnOct₂ as the catalyst, as reported in Zheng Zhang, Dirk W. Grijpma and Jan Feijen, Macromol. Chem. Phys., 2004, 205, 867-875. It is represented in scheme 2.

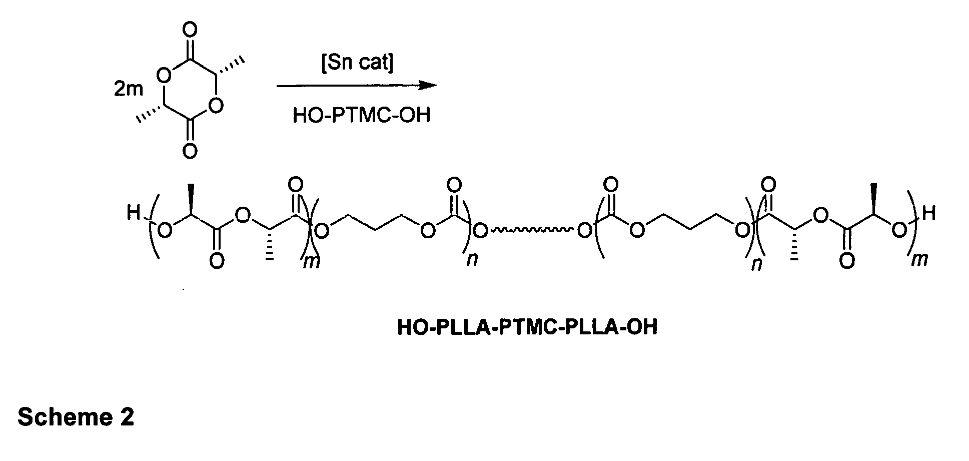

The preparation of triblock PHB-PTMC-PHB copolymers (PHB = poly(3-hydroxybutyrate)) has been reported in Hans R. Kricheldorf and Andrea Stricker, Macromol. Chem. Phys., 1999, 200, 1726-1733. The method used involved the sequential addition of TMC and then BBL (BBL = rac-beta-butyrolactone) onto the tin-based di-initiator 2,2-dibutyl-2-stanna-1,3-dioxepane (DSDOP). In this process, a stoechiometric amount of tin vs macromolecules is used to prepare the ABA-type block copolymer, and there was no use of macrodiols as transfer agents.

It is an aim of the present invention to provide di-, tri-, or multi-block polyester/polycarbonate copolymers.

It is also an aim of the present invention to prepare fully biodegradable di-, tri-, or multi-block linear, branched or star-shaped polyester/polycarbonate copolymers.

It is a further aim of the present invention to tailor di-, tri-, or multi-block copolymers with desired properties.

Any one of these aims is, at least partially, fulfilled by the present invention.

Accordingly, the present invention discloses a process for preparing di-, tri, or multi-block polyester/polycarbonate (PC) copolymers by ring-opening polymerisation in the presence of a catalyst system comprising a compound selected from a Lewis acidic metal salt or a metal complex or a metal-free organic base, said process further comprising either a linear monohydroxy HO-PC-OR, or a linear telechelic dihydroxy HO-PC-OH, or a star polyhydroxy R-(PC-OH)*ₙ* end-capped polycarbonate acting both as transfer agent and as co-initiator via hydroxyl group(s), wherein PC is a polycarbonate chain obtained by ring-opening polymerisation of a cyclic ester or carbonate monomer.

The present invention discloses a process for preparing di-, tri, or multi-block polyester/polycarbonate polymers by ring-opening polymerisation that comprises the steps of:
a) providing catalyst system based on a compound selected from a Lewis acidic metal salt or a metal complex or a metal-free organic base;
b) providing either a linear monohydroxy HO-PC-OR, or a linear telechelic dihydroxy HO-PC-OH, or a star polyhydroxy R-(PC-OH)n end-capped polycarbonate acting both as co-initiator and as transfer agent via hydroxyl group(s), wherein PC is a polycarbonate chain obtained by ring-opening polymerisation of a cyclic carbonate monomer;
c) providing a cyclic ester/carbonate monomer selected, for instance, from 6- or 7-membered cyclic carbonate such as for example, 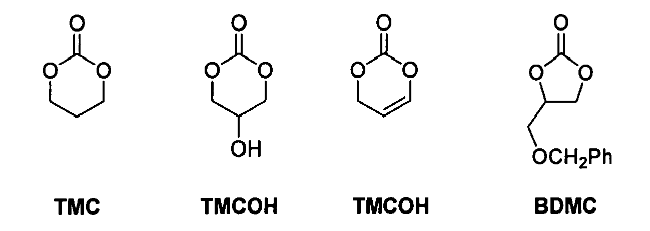 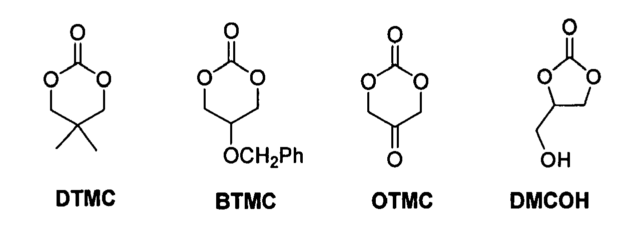 lactide (LA), glycolide , rac-beta-butyrolactobe (rac-BBL) or epsilon-caprolactone (CL), or any other lactone, diester, cyclic carbonate, morpholinediones, ...
d) maintaining under polymerisation conditions at a temperature of from room temperature to 150 °C;
e) retrieving a di- tri- or multi-block copolymer.

The macro-polyol plays two roles:
- according to the type of catalyst used, it acts either as an external nucleophile for initiating polymerisation via ring-opening of a monomer activated for example with Al or organic base catalysts, or for transforming the pre-catalyst, for example a metal-amido complex, that has little or no activity, into an active metal-alkoxide species, via an alcoholysis process;
- it also acts as a transfer agent, by generating multiple polymer chains. Excess alcohol acts as transfer agent, transferring propagating polycarbonate chains from the active metal center to dormant hydroxy-end capped polycarbonate chains. Accordingly, it is observed that the number average molecular weight increases when the monomer/alcohol ratio increases. The latter chain transfer process can be represented schematically as follows:

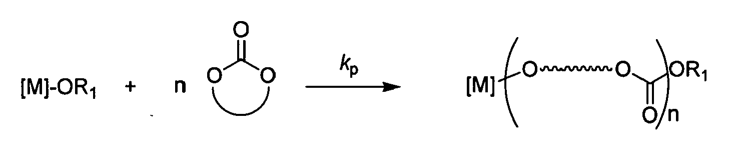

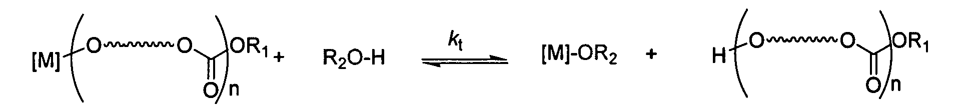

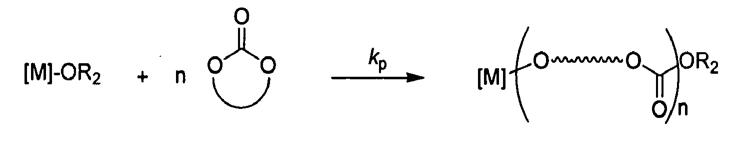

The metal complexes acting as catalyst systems can be selected from single-site catalyst components based upon a bulky β-diiminate ligands (BDI) as described by Coates et al. (B.M. Chamberlain, M. Cheng, D.R. Moore, T.M. Ovitt, E.B. Lobkovsky, and G.W. Coates, in J. Am. Chem. Soc., 2001, 123, 3229) and represented by general formula: 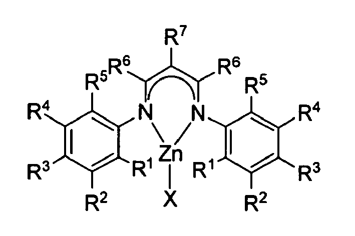 wherein R¹, R², R³, R⁴, R⁵, R⁶ and R⁷ are each independently selected from hydrogen, unsubstituted or substituted hydrocarbyl, or inert functional group and wherein two or more of said groups can be linked together to form one or more rings, wherein X is an hydrocarbyl radical having from 1 to 12 carbon atoms, an alkoxide group OR*, an amido group NR**₂ or a borohydride group (BH₄).

Among the preferred catalytic compounds of that category, one can further cite [BDI]Zn(N(SiMe₃)₂), {(BDI]Zn(O*i*Pr),)₂, Zn(N(SiMe₃)₂), ZnEt₂, Ln(N(SiMe₃)₂)₃ (Ln = group III metals, including the lanthanide series), "Ln(O*i*Pr)₃", Al(O*i*Pr)₃, Mg[N(SiMe₃)₂]₂, Ca[N(SiMe₃)₂]₂(THF)₂, (BDI)Fe[N(SiMe₃)₂], Fe[N(SiMe₃)₂]₂, and Fe[N(SiMe₃)₂]₃.

They act by a coordination/insertion mechanism.

The metallic salt can be selected from metallic complexes of formula M(OSO₂CF₃)ₙ, hereafter referred to as triflates or OTf or M(N(OSO₂CF₃)₂)ₙ, hereafter referred to as triflimidates or NTf₂ or M(RC(O)CR₂C(O)R)ₙ, hereafter referred to as acetylacetonates or acac or (R"CO₂)ₙM, hereafter referred to as carboxylates, wherein M is a metal Group 2, 3, including the lanthanide series, hereafter referred as Ln, 4, 12, 13, 14 or 15 of the periodic Table, wherein each R is selected independently from a linear or branched hydrocarbyl radical having from 1 to 12 carbon atoms, substituted or not by for instance an halogen or heteroatom, wherein each R" is selected independently from a perfluorinated alkyl or aryl residue having from 1 to 12 carbon atoms, and wherein n is the valence of M.

Preferably, M is Mg(II), Ca(II), Sc(III), Ln(III),Y(III), Sm(III), Yb(III), Ti(IV), Zr(IV), Fe(II), Fe(III), Zn(II), AI(III) Sn(IV) or Bi(III). More preferably, it is Al, Zn or Sc, Al being the most efficient metal.

Preferably each R is selected independently from alkyl group such as CH₃ or a substituted alkyl group such as CF₃, More preferably, they are all the same and they are CR₃ or CF₃.

Preferably, R" is (C₆F₅) or (CF₃), or CF₃(CF₂)ₘ wherein m is an integer from 1 to 6.

Among the preferred catalytic compounds according to the present invention, one can cite Al(OTf)₃, Al(NTf₂)₃, Mg(OTf)₂, Ca(OTf)₂, Zn(OTf)₂, Sc(OTf)₃, Bi(OTf)₃, Fe(acac)₃, Al(OCOCF₃)₃, Zn(OCOCF₃)₂, Zn(BF₄)₂, Zn(acac)₂.

These catalysts act by an activated monomer pathway, in the combination with an external nucleophile, typically the PC-(OH)ₙ compound.

The non-metallic organic compounds can be selected, as non limitative examples, from dimeric phosphazene bases as disclosed for example in Zhang et al. (Zhang L., Nederberg F., Messman J.M., Pratt R.C., Hedrick J.L., and Wade C.G., in J. Am. Chem. Soc., 2007, 129, 12610-12611) or phosphazene bases as disclosed for example in Zhang et al. (Zhang L., Nederberg F., Pratt R.C., Waymouth R.M., Hedrick J.L., and Wade C.G., in Macromolecules 2007, 40, 4154-4158) or organic compounds such as amines or guanidine as described for example in Nederberg et al. (Nederberg F., Lohmeijer G.B., Leibfarth F., Pratt R.C., Choi J., Dove A.P., Waymouth R.M., Heidrich J.L., in Biomacromolecules, 8, 153, 2007) or in Mindemark et al. (Mindemark J., Hilborn J., Bowden T., in Macromolecules, 40, 3515, 2007).

It must be noted that none of the catalyst systems used in the present invention are toxic.

The alcohol can be represented by formula R'OH wherein R' is an hydrocarbyl, linear or branched, having from 1 to 20 carbon atoms. Preferably R' is a secondary alkyl residue or benzylic group, more preferably it is isopropyl (*i*Pr) or benzyl (Bn). It can also be a poly-ol derived from biomass such as glycerol or any other sugar based alcohol (erythritol, cyclodextrine)...All alcohols can be used individually or in combination.

Hydroxy-end-capped polycarbonates can be prepared by ring-opening polymerisation (ROP) of a cyclic carbonate monomer in the presence of a catalyst and an alcohol that acts as an initiator and as a transfer agent. When using a mono-alcohol R'OH, all polycarbonates produced via this technique are thus capped at one end by a hydroxy group and at the other macromolecule terminus by a carbonate moiety. For instance, HO-PTMC-OR homopolymers have been prepared in high yield by ROP of carbonate TMC, using as catalyst either (BDI)Zn[N(SiMe₃)₂], Al(OTf)₃ or dimethylaminopyridine (DMAP), in the presence of an alcohol (R'OH) selected typically from BnOH or *i*PrOH, wherein PTMC is the polyTMC. The homopolymers have controlled molecular weights and narrow polydispersity. The reaction is presented schematically in scheme 3.

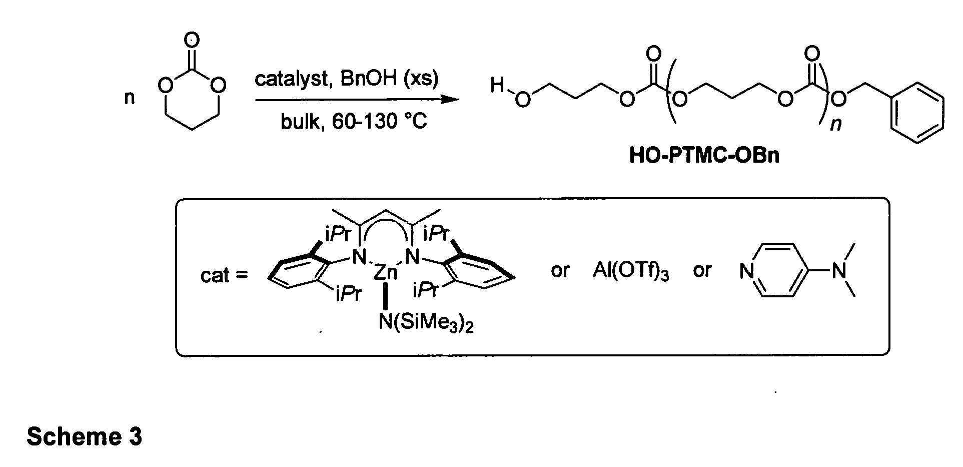

Such hydroxy-end-capped HO-PTMC-OR' homopolymers can be subsequently used as macro-initiators and transfer agents, to prepare with high efficiency a variety of diblock copolymers. The reactions are performed in the presence of a catalyst selected for example from (BDI)Zn(N(SiMe₃)₂] or AI(OTf)₃ or an organic base such as DMAP and they allow the ROP of cyclic polar monomers such as TMC, TMC(OMe)₂, *rac*-BBL or lactides (LA) or any heterocyclic monomer among lactones, diesters, carbonates, morpholinediones. Some of these are represented in scheme 4, as non-limitative examples.

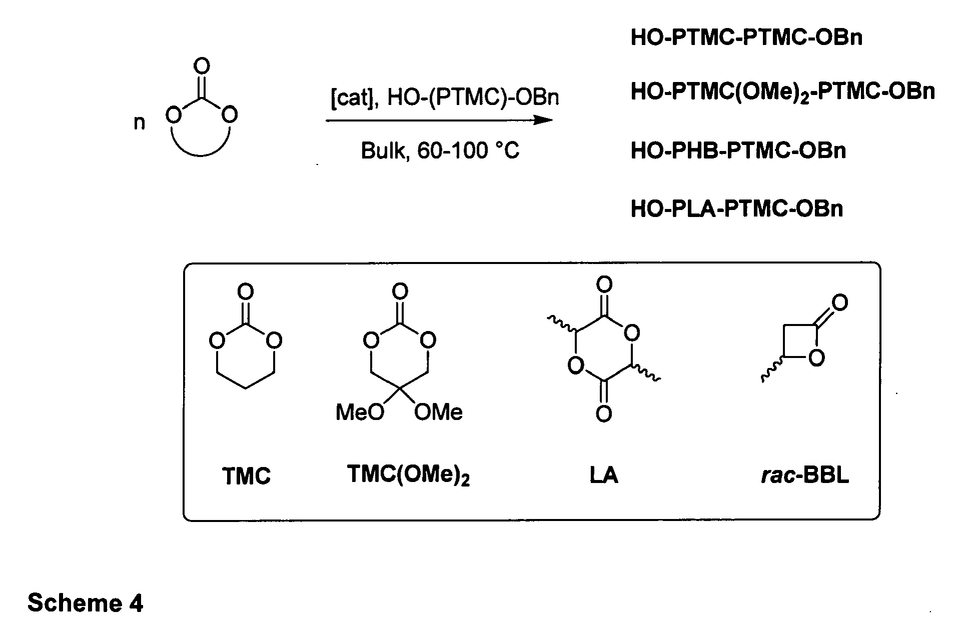

These reactions are carried out at a temperature ranging between room temperature (about 25 °C) and 150 °C, preferably between 50 and 150 °C, more preferably between 80 and 100 °C. The temperature depends upon the nature of catalyst system and on the monomer. For example, aluminium-based systems are more tolerant but less active than zinc-based systems and thus demand a higher temperature than zinc-based systems. For example lactides are less reactive than TMC and thus also demand a higher temperature than TMC.

### List of figures.

Figure 1 represents the ¹H NMR (CDCl₃, 200 MHz) spectrum of a diblock PHB-PTMC-OBn copolymer.
Figure 2 represents the ¹³ C{¹H} NMR (CDCl₃, 50 MHz) spectrum of a diblock PHB-PTMC-OBn copolymer.
Figure 3 represents the ¹H NMR (CDCl₃, 200 MHz) spectrum of a diblock PLA-PTMC-OBn copolymer.
Figure 4 represents the ¹H NMR (CDCl₃, 200 MHz) spectrum of a triblock PLA-PTMC-PLA copolymer.

### Examples 1-4.

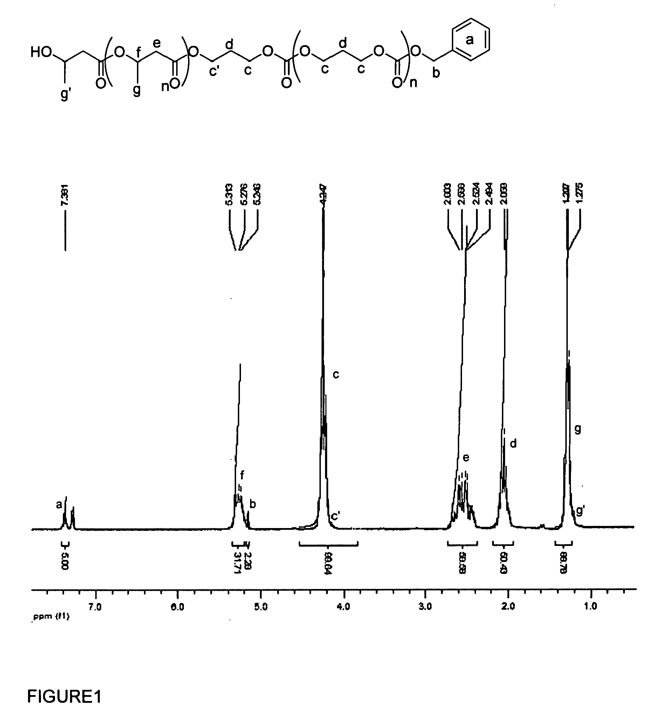

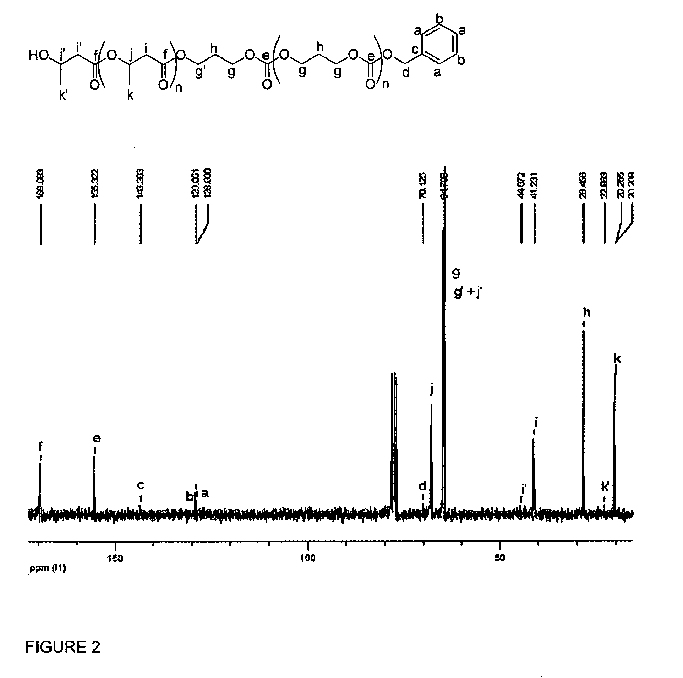

The controlled ROP of various cyclic monomers has been carried out using the (BDI)Zn[N(SiMe₃)₂]/HO-PTMC-OBn catalyst system. The polymerisation conditions and results are displayed in Table 1. The ¹H and ¹³C NMR spectra are displayed respectively in Figures 1 and 2

**Table 1.**

| ex | Monomer | *M*ₙ (g_{.}mol⁻¹) (*M*_{w}/*M*ₙ) HO-PTMC-OBn | [monomer]₀/[Zn]₀ /[HO-PTMC-OBn]₀ | Temp (°C) | Time (min) | Conv. (%)^{a} | *M̅n* ₜₕₑₒ*^{b}* (g.mol⁻¹) | *M̅n* _{NMB} (g.mol⁻¹) | *M̅n* _{SEC}*^{c}* (g.mol⁻¹) | *M̅w* / *M̅n*^{c} |
|---|---|---|---|---|---|---|---|---|---|---|
| 1 | TMC | 2 200 (1.35) | 100/1/5 | 60 | 30 | 100 | 4240 | 4 950 | 4 520* | 1.35 |
| 2 | TMC(OMe)₂ | 2 360 (1.30) | 200/1/10 | 90 | 160 | 87 | 5 180 | 5 540 | 4 800 | 1.36 |
| 3 | *rac*-BBL | 2 360 (1.30) | 200/1/5 | 60 | 60 | 82 | 5 180 | 4 420 | 6 320 | 1.19 |
| 4 | LLA | 2 360 (1.30) | 200/1/10 | 100 | 20 | 100 | 5240 | 4270 | 5 500* | 1.17 |

| | | | | | | | | | | |
|---|---|---|---|---|---|---|---|---|---|---|
| ^{a} Determined by ¹H NMR ^{b} *M*_{n,theo} = [Monomer]₀/[HO-PTMC-OBn] x M_{[Monomer]} X conversion + M_{(HO-PTMcOBn)}. with M_{TMC} =102.09 g.mol⁻¹, *M*_{TMC(OMe)2} =162 g.mol⁻¹, M_{BBL} = 86 g.mol⁻¹, and M_{LLA} =144 g.mol⁻¹ ^{c} Determined by SEC vs PS standards; **M*ₙ values corrected for hydrodynamic volume differences (correction coefficient 0.73 for PTMC and 0.58 for PLA). | | | | | | | | | | |

### Examples 5-12.

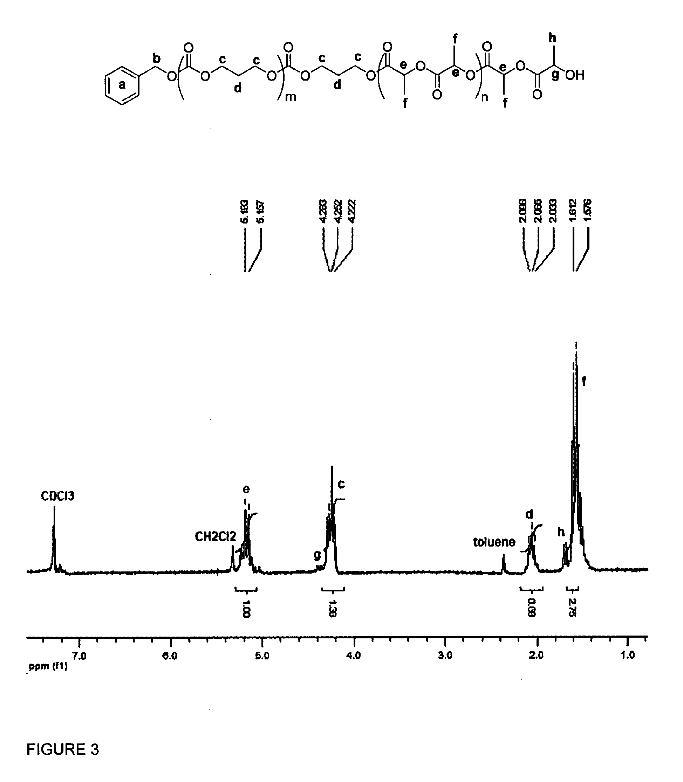

Due to the potential interest of the final copolymers, notably as modifiers of poly(lactide) (PLA) and/or as compatibilisers, special attention has been paid to the ROP of L-lactide (LLA) with such catalyst systems. A first series of investigations was carried out by using (BDI)Zn[N(SiMe₃)₂]/HO-PTMC-OBn catalyst system. All reactions were carried out at a temperature of 100 °C, in a 4M solution of toluene, using rigorously purified LLA. It is represented in Scheme 5 and the results are reported in Table 2. The ¹H NMR is represented in Figure 3.

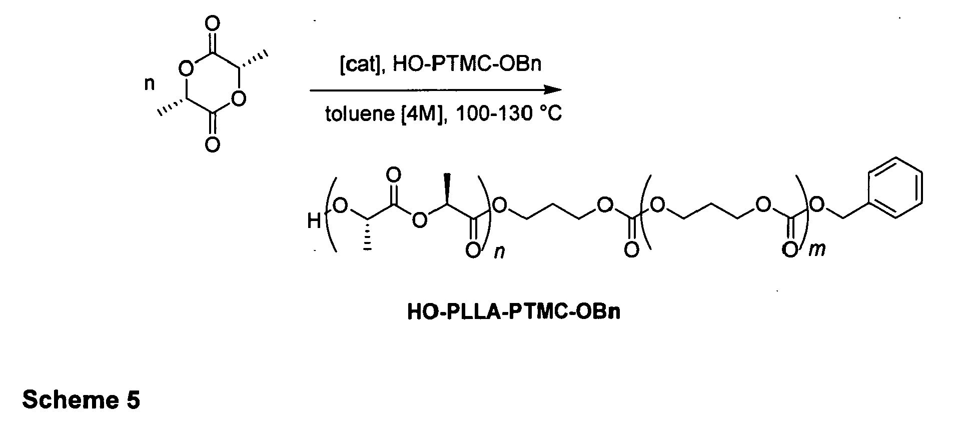

**Table 2.**

| ex | *M*ₙ (g.mol⁻¹) (*M*_{w}/*M*ₙ) HO-PTMC-OBn | [LLA]₀/[Zn]₀/[HO-PTMC-OBn]₀ | Time (h) | Conv^{.a} (%) | *M̅n*ₜₕₑₒ*^{b}* (g.mol⁻¹) | *M̅n*_{SEC}*^{c}* (g.mol⁻¹) | *M̅wlM̅n^{c}* |
|---|---|---|---|---|---|---|---|
| 5 | 2 360 (1.30) | 200/1/10 | 0.3 | 100 | 5240 | 5 500^{d} | 1.17 |
| 6 | 2 360 (1.30) | 1 500/1/10 | 4 | 100 | 23 960 | 18 850 | 1.17 |
| 7 | 2 360 (1.30) | 2 500/1/10 | 4 | 100 | 38 360 | 43 050 | 1.24 |
| 8 | 15 300 (1.64) | 1 500/1/5 | 9 | 90 | 54 180 | 32 600 | 1.21 |
| 9 | 10200 (1.52) | 1 500/1/5 | 2 | 100 | 53 400 | 51 100 | 1.86 |
| 10 | 28 760 (1.70) | 2 000/1/10 | 3 | 40 | 40 280 | 46 850 | 1.43 |
| 11 | 33 780 (1.55) | 1 000/1/5 | 14 | 78 | 56 250 | 33 500 | 1.51 |
| 12 | 2650 (1.49) | 1 000/1/5 | 2.5 | 100 | 55 300 | 58 620 | 1.64 |

| | | | | | | | |
|---|---|---|---|---|---|---|---|
| ^{a} Determined by ¹H NMR ^{b} Mnₜₙₑₒ = [LLA]₀/[HO-PTMC-OBn] x 144 x conversion + M_{(HO-PTMC-OBn)} ^{c} Determined by SEC vs PS standards; Mₙ values corrected for hydrodynamic volume differences (correction coefficient 0.73 for PTMC and 0.58 for PLA). ^{d} *M*ₙ determined by ¹H NMR = 4 270 g.mol⁻¹ | | | | | | | |

It must be noted that in examples 5, 6, 7, 8, 10 and 11, macromer HO-PTMC-OBn has been synthesised, precipitated and stocked before being used in the multi-block polymerisation. Consequently it has potentially absorbed water and has thus been potentially deteriorated, thereby explaining the poorer correlation between the theoretical and experimental values of number average molecular weight Mn. Examples 9 and 12, on the contrary were carried out by sequential reaction without preliminary isolation of HO-PTMC-OBn

### Examples 13 to 20.

Different, more robust and/or cheaper catalyst systems involving, instead of an organometallic catalyst precursor, a Lewis acidic metal salt or an organic base were also investigated. Aluminum triflate, DMAP and a phosphazene in combination with HO-PTMC-OBn were selected for those investigations in the ROP of technical-grade LLA. The reactions were carried out at a temperature of 130 °C, in a 4M solution of toluene, with purified LLA. The results are summarized in Table 3.

**Table 3.**

| ex | [catalyst] | *M*ₙ (g.mol⁻¹) (*M*_{w}/*M*ₙ) [HO-PTMGOBn] | [LLA]₀/ [catalyst]₀/ [HO-PTMC-OBn]₀ | Time (min) | Conv. (%)^{a} | *M̅n*ₜₕₑₒ*^{b}* (g_{.}mol⁻¹) | *M̅n*_{SEC}*^{c}* (g.mol⁻¹) | *M̅w*/ *M̅n^{d}* |
|---|---|---|---|---|---|---|---|---|
| 13 | Al(OTf)₃ | 15 300 (1.64) | 1 500/1/5 | 840 | 72 | 46 400 | 22 400 | 1.35 |
| 14 | Al(OTf)₃ | 10100 (1.57) | 1 500/1/5 | 4200 | 93 | 49 560 | 43 850 | 1.61 |
| 15 | Al(OTf)₃ | 33 780 (1.55) | 1 000/1/5 | 1 440 | 70 | 55 940 | 26 800 | 1.47 |
| 16 | DMAP | 2 360 (1.30) | 200/1/5 | 240 | 71 | 6450 | 4 300^{d} | 1.13 |
| 17 | DMAP | 15 300 (1.64) | 1 500/1/5 | 1 440 | 30 | 28 260 | 19 350 | 1.40 |
| 18 | DMAP | Ca. 15 000 | 1 500/1/5 | 600 | 90 | 51280 | 26 900 | 1.32 |
| 19 | Phosphaz | 15 300 (1.64) | 1 500/1/5 | XXXX | XXXX | XXXX | XXXX | XXXX |
| 20^{e} | Phosphaz | 9800 (1.23) | 1 500/1/5 | 1320 | 90 | 47 880 | 36 150 | 1.32 |

| | | | | | | | | |
|---|---|---|---|---|---|---|---|---|
| ^{a} Determined by ¹H NMR ^{b} M_{n,tneo} = [LLA]₀/[HO-PTMC-OBn] x 144 x conversion + M_{(HO-PTMC-OBn)} ^{c} Determined by SEC vs PS standards; ; *M*ₙ values corrected for hydrodynamic volume differences (correction coefficient 0.73 for PTMC and 0.58 for PLA). ^{d} *M*ₙ determined by ¹H NMR = 3 410 g.mol⁻¹ ^{e} Example 20 was conducted at a temperature of 100°C. | | | | | | | | |

In examples 13, 15, 16, 17 and 19, macromer HO-PTMC-OBn has been synthesized, precipitated and stocked before being used in the multi-block polymerisation. In examples 14, 18 and 20, on the contrary polymerisation was carried out by sequential reaction without preliminary isolation of HO-PTMC-OBn.

### Examples 21-28.

### Production of Multiblock Copolymers.

A diol was used in the ROP of a cyclic carbonate as initiator/transfer agent. The resulting polycarbonate contained two hydroxy chain-ends. (BDI)Zn[N(SiMe₃)₂], Al(OTf)₃ or an organic base such as DMAP or a phosphazene were used as catalyst component and 1,3-propanediol or 1,4-benzenedimethanol as transfer agent/initiator. The ROP process is described in scheme 6.

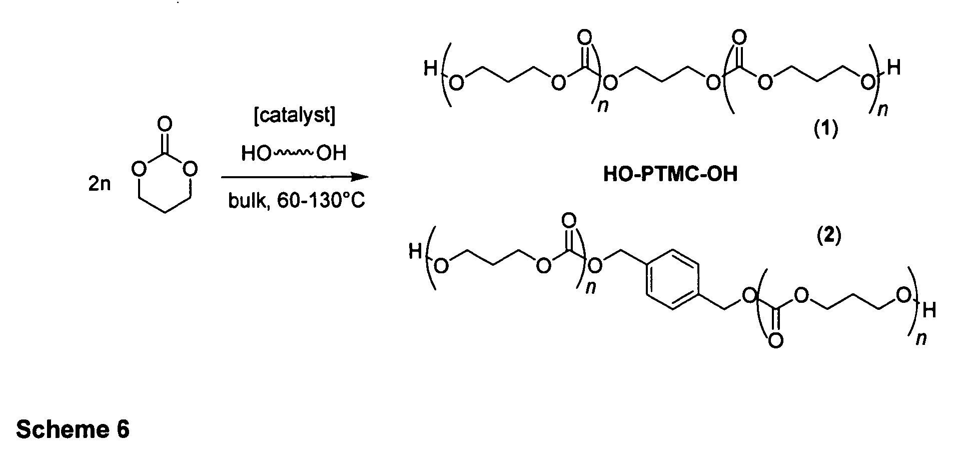

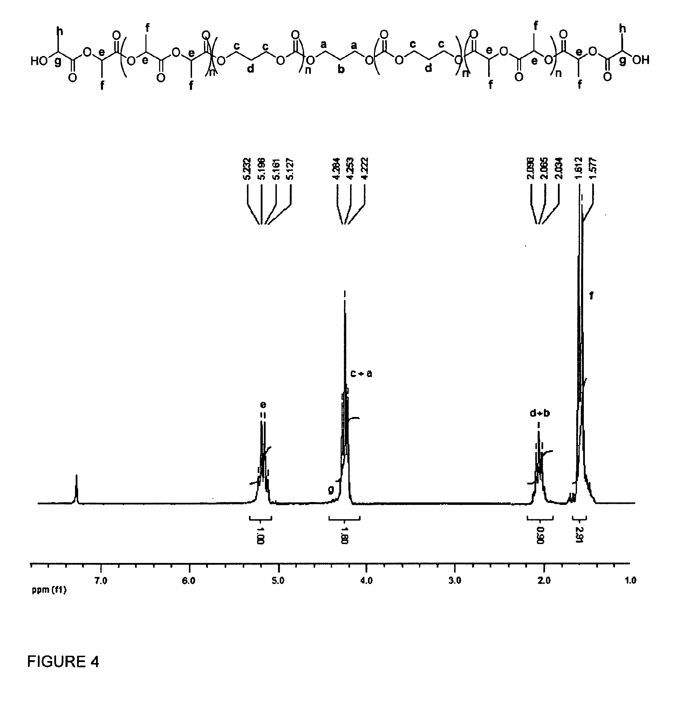

The telechelic HO-PTMC-OH homopolymers prepared in scheme 6 were used subsequently as transfer agent/initiator for the preparation of ABA-type tri-block copolymers. This process was used in the preparation of HO-PLLA-PTMC-PLLA-OH triblock copolymers. The reactions have been conducted in highly concentrated toluene solutions and are represented in scheme 7. The results obtained using (BDI)Zn[N(SiMe₃)₂] as catalyst with purified LLA, and using aluminum triflate or DMAP or phosphazene as catalysts with technical grade LLA are summarised in Tables 4 and 5. For examples 21 to 24, displayed in Table 4, the reactions were carried out with (BDI)Zn[N(SiMe₃)₂] as catalyst at a temperature of 100 °C. For examples 25 to 28, displayed in Table 5, the reactions were carried out at a temperature of 130 °C and the catalyst system is indicated in the Table. Figure 4 represents the ¹H NMR spectrum of PLA-PTMC-PLA copolymer.

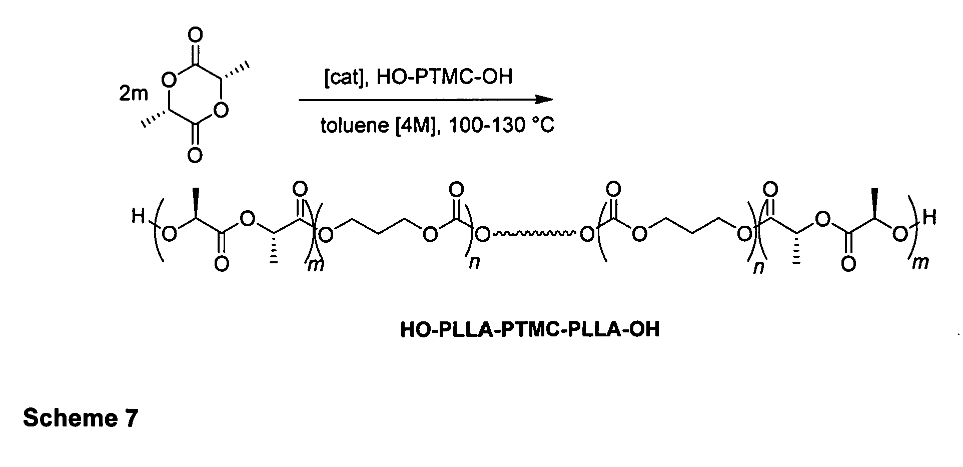

**Table 4.**

| ex | *Mₙ* (g.mol⁻¹) (*M*w/*M*n) HO-PTMC-OH | [LLA]₀/ [Zn]₀ /[HO-PTMC-OH]₀ | Time (min) | Conv. (%)^{a} | *M̅n*ₜₕₑₒ*^{b}* (g.mol⁻¹) | *M̅n*_{NMR}*^{a}* (g.mol⁻¹) | *M̅n*_{SEC}*^{c}* (g.mol⁻¹) | *M̅w*/ *M̅n^{c}* |
|---|---|---|---|---|---|---|---|---|
| 21 | 3 700 (**1**) (1.30) | 200/1/5 | 180 | 100 | 9 460 | 8 730 | 9 300 | 1.19 |
| 22 | 4 600 (**2**) (1.62) | 200/1/5 | 210 | 100 | 10 360 | 6670 | 7200 | 1.21 |
| 23 | 13 200 (**1**) (1.69) | 1 500/1/5 | 840 | 100 | 56 400 | nd | 32 350 | 1.20 |
| 24 | 12300 (**1**) (1.58) | 1 500/1/5 | 180 | 95 | 53 350 | nd | 45 960 | 1.54 |

| | | | | | | | | |
|---|---|---|---|---|---|---|---|---|
| ^{a} Determined by ¹H NMR ^{b} M_{n,tneo} = [LLA]₀/[HO-PTMC-OH]₀ x 144 x conversion + M_{(HO-PTMC-OH)}. ^{c} Determined by SEC vs PS standards; *M*ₙ values corrected for hydrodynamic volume differences (correction coefficient 0.73 for PTMC and 0.58 for PLA). | | | | | | | | |

Example 24 was carried out by sequential reaction without preliminary isolation of HO-PTMC-OH

**Table 5.**

| ex | [catalyst] | *M*ₙ (g.mol⁻¹) (*M*_{w}/*M*ₙ) HO-PTMC-OH | [LLA]₀/[cat]₀/ [HO-PTMC-OH]₀ | Time (min) | Conv_{.} (%)^{a} | *M̅n*ₜₕₑₒ*^{b}* (g.mol⁻¹) | *M̅n*_{SEC}*^{c}* (g.mol⁻¹) | *M̅w* / *M̅n ^{c}* |
|---|---|---|---|---|---|---|---|---|
| 25 | Al(OTf)₃ | 10 000 (1.45) | 1 500/1/5 | 1 440 | 100 | 53 200 | 15 200 | 1.28 |
| 26 | Al(OTf)₃ | Ca. 15 000 | 1 500/1/5 | 1 440 | 90 | 48 880 | 40 550 | 1.48 |
| 27 | DMAP | 10 000 (1.45) | 1 500/1/5 | 1440 | 87 | 47 580 | 30 400 | 1.44 |
| 28 | Phosphaz | 12 400 (1.44) | 1 500/1/5 | 1320 | 60 | 38 320 | 22 600 | 1.17 |

| | | | | | | | | |
|---|---|---|---|---|---|---|---|---|
| ^{a} Determined by ¹H NMR ^{b} M_{n,theo} = [LLA]₀/[HO-PTMC-OH] x 144 x conversion + M_{(HO-PTMC-OH)} ^{c} Determined by SEC vs PS standards; *M*ₙ values corrected for hydrodynamic volume differences (correction coefficient 0.73 for PTMC and 0.58 for PLA). | | | | | | | | |

Examples 26 and 27 were conducted as sequential reaction without preliminary isolation of HO-PTMC-OH.

Example 28 was conducted at a temperature of 100 °C

### Example 29.

Similarly, ABA-type triblock copolymers of HO-PTMC(OMe)₂-PTMC-PTMC(OMe)₂-OH were prepared by ROP of TMC(OMe)₂ with (BDI)Zn[N(SiMe₃)₂]/HO-PTMC-OH catalyst system as represented in scheme 8. The reactions were carried out at a temperature of 60 °C with purified TMC(OMe)₂. The results are summarised in Table 6.

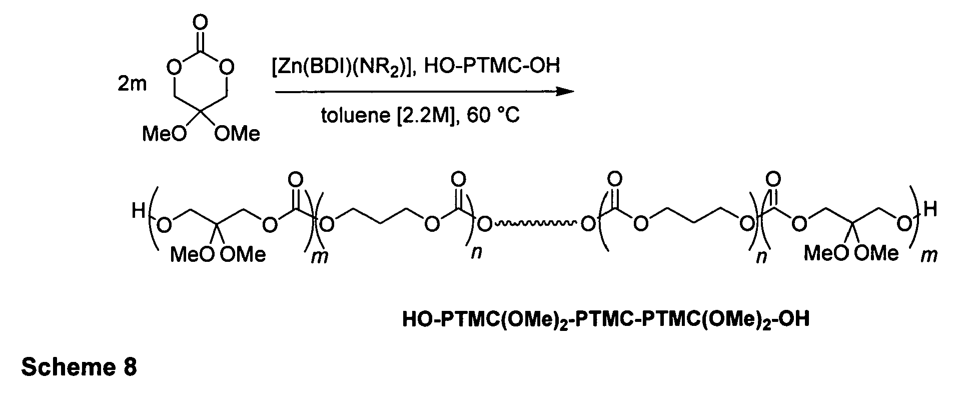

**Table 6.**

| ex | *M*ₙ (g.mol⁻¹) (*M*_{w}/*M*ₙ) HO-PTMC-OH | [BBL]₀/[Zn]₀/ [HO-PTMC-OH]₀ | Time (min) | Conv. (%)^{a} | *M̅n*ₜₕₑₒ*^{b}* (g.mol⁻¹) | *M̅n*_{NMR}^{a} (g.mol⁻¹) | *M̅n*_{SEC}*^{c}* (g.mol⁻¹) | *M̅*w/*M̅n ^{d}* |
|---|---|---|---|---|---|---|---|---|
| 29 | 6 060 (1.21) | 200/1/5 | 360 | 100 | 12 540 | nd | 12210 | 1.38 |

| | | | | | | | | |
|---|---|---|---|---|---|---|---|---|
| ^{a} Determined by ¹H NMR ^{b} M_{n,tneo} = [TMC(OMe)₂]₀/[HO-PTMC-OH] x 162 x conversion + M_{(HO-PTMGOH)} ^{c} Determined by SEC vs PS standards; Mₙ values uncorrected | | | | | | | | |

### Examples 30-31.

Finally, HO-PHB-PTMC-PHB-OH ABA-type triblock copolymers were prepared by ROP of *rac*-BBL with (BDI)Zn[N(SiMe₃)₂]/HO-PTMC-OH catalyst system as represented in scheme 9. The reactions were carried out at a temperature of 60 °C with purified *rac*-BBL. The results are summarised in Table 7.

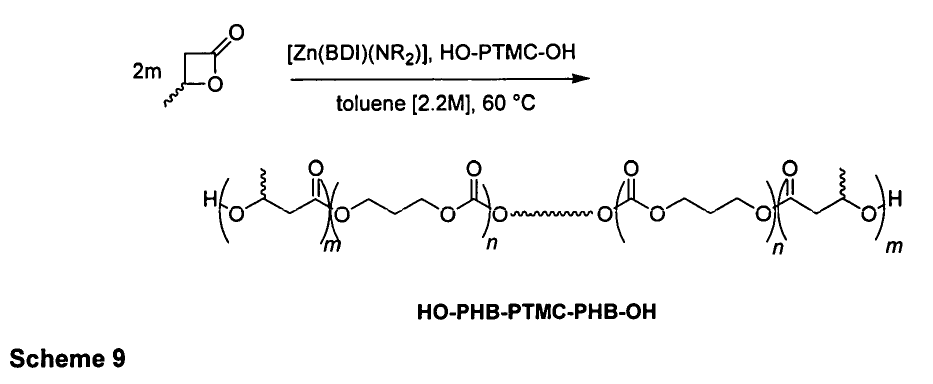

**Table 7.**

| ex | *M*ₙ (g.mol⁻¹) (*M*_{w}/*M*ₙ) HO-PTMC-OH | [BBL]₀/[Zn]_{0/} [HO-PTMC-OH]₀ | Time (min) | Conv. (%)^{a} | *M̅n*ₜₕₑₒ *^{b}* (g.mol⁻¹) | *M̅n*_{NMR}*^{a}* (g.mol⁻¹) | *M̅n*_{SEC}*^{c}* (g.mol⁻¹) | *M̅w*/ *M̅n^{d}* |
|---|---|---|---|---|---|---|---|---|
| 30 | 1 780 (1.18) | 200/1/5 | 360 | 77 | 4 429 | 4 536 | 4 500 | 1.12 |
| 31 | 15060 (1.31) | 1 500/1/5 | 840 | 95 | 39 570 | nd | 31 400 | 1.37 |

| | | | | | | | | |
|---|---|---|---|---|---|---|---|---|
| ^{a} Determined by ¹H NMR ^{b} M_{n,theo} = [LLA]₀/[HO-PTMC-OH] x 86 x conversion + M_{(HO-PTMC-OH)} ^{c} Determined by SEC vs PS standards; *M*ₙ values uncorrected | | | | | | | | |

Example 31 was carried out by sequential reaction without preliminary isolation of HO-PTMC-OH.

## Claims

1. A process for preparing di-, tri, or multi-block polyester/polycarbonate polymers by ring-opening polymerisation that comprises the steps of:
a) providing a catalyst system comprising a compound selected from a Lewis acidic metal salt or a metal complex or a metal-free organic base;
b) providing either a linear monohydroxy HO-PC-OR, or a linear telechelic dihydroxy HO-PC-OH, or a star polyhydroxy R-(PC-OH)*ₙ* end-capped polycarbonate acting both as co-initiator and as transfer agent via hydroxyl group(s), wherein PC is a polycarbonate chain obtained by ring-opening polymerisation of a cyclic carbonate monomer;
c) providing a cyclic ester/carbonate monomer selected, for instance, from 6- or 7-membered cyclic carbonate such as TMC or TMC(OMe)₂, lactide, glycolide, rac-beta-butyrolactone or epsilon-caprolactone (CL), or any other lactone, diester, cyclic carbonate, or a morpholinedione.
d) maintaining under polymerisation conditions at a temperature of from room temperature to 150 °C;
e) retrieving a di- tri- or multi-block copolymer.

2. The process of claim 1 wherein the metallic salt is selected M(OSO₂CF₃)ₘ, M(N(OSO₂CF₃)₂)ₙ, or NTf₂ or M(RC(O)CR₂C(O)R)ₙ, or (R"CO₂)ₙM, wherein M is a metal Group 2, 3, including the lanthanide series, hereafter referred as Ln, 4, 12, 13, 14 or 15 of the periodic Table, wherein each R is selected independently from a linear or branched hydrocarbyl radical having from 1 to 12 carbon atoms, substituted or not by an halogen or heteroatom, wherein each R" is selected independently from a perfluorinated alkyl or aryl residue having from 1 to 12 carbon atoms, and wherein n is the valence of M.

3. The process of claim 2 wherein M is Mg(II), Ca(II), Sc(III), Y(III), Sm(III), Yb(III), Zr(IV), Fe(II), Fe(III), Zn(II), AI(III) Sn(IV) or Bi(III), preferably, Al, Zn or Sc, more preferably Al.

4. The process of claim 2 or claim 3 wherein each R is selected independently from alkyl group such as CH₃ or a substituted alkyl group such as CR₃ or CF₃,

5. The process of any one of claims 2 to 4 wherein R" is (C₆F₅) or (CF₃), or CF₃(CF₂)ₘ wherein m is an integer from 1 to 6.

6. The process of any one of claims 2 to 5 wherein the metallic salt is selected from Al(OTf)₃, Al(NTf₂)₃, Mg(OTf)₂, Ca(OTf)₂, Zn(OTf)₂, Sc(OTf)₃, , Ln(OTf)₃, Ln(NTf₂)_{3,} Bi(OTf)₃, Fe(acac)₃, Al(OCOCF₃)₃, Zn(OCOCF₃)₂, Zn(BF₄)₂, Zn(acac)₂

7. The process of claim 1 wherein the metal complex is selected from bulky β-diiminate ligands (BDI) represented by general formula 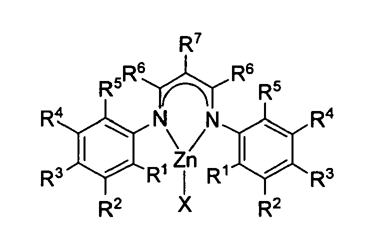 wherein R¹, R², R³, R⁴; R⁵, R⁶ and R⁷ are each independently selected from hydrogen, unsubstituted or substituted hydrocarbyl, or inert functional group and wherein two or more of said groups can be linked together to form one or more rings, wherein X is an hydrocarbyl radical having from 1 to 12 carbon atoms, an alkoxide group OR*, an amido group NR**₂ or a borohydride group (BH₄).

8. The process of claim 7 wherein the metal complex is selected from [BDI]Zn(N(SiMe₃)₂), {[BDI]Zn(OiPr),}₂, Zn(N(SiMe₃)₂), ZnEt₂, Y(N(SiMe₃)₂), "Y(OiPr)₃", or Al(OiPr)₃.

9. The process of claim 1 wherein the metal-free organic base is selected from dimeric phosphazene base, phosphazene bases, amine, guanidine, thiourea or any combination of these.

10. The process of any one of the preceding claims wherein hydroxy-end-capped polycarbonates can be prepared by ring-opening polymerisation (ROP) of a cyclic carbonate monomer in the presence of a catalyst and an alcohol that acts as an initiator and a transfer agent.

11. Di-, tri- or multiblock polyesters/polycarbonates (co)polymers obtained by the process of any one of claims 1 to 11.
